# EUROPÄISCHE PATENTSCHRIFT

(11) **EP 1 869 757 B1**
(45) Veröffentlichungstag und Bekanntmachung des Hinweises auf die Patenterteilung: **21.07.2010**
(21) Anmeldenummer: 06829043.6
(22) Anmeldetag: 14.11.2006
(51) Int. Cl.: H02K 55/00, H02K 41/00, H02K 3/24, H02K 9/20

(54) **PRIMÄRTEIL EINES LINEARMOTORS UND LINEARMOTOR HIERMIT**
PRIMARY PART OF A LINEAR MOTOR AND LINEAR MOTOR THEREWITH
PARTIE PRIMAIRE D'UN MOTEUR LINEAIRE ET MOTEUR LINEAIRE LA COMPRENANT

(30) Priorität: 14.11.2005 DE 102005054531
(43) Veröffentlichungstag der Anmeldung: 26.12.2007
(73) Patentinhaber: Zenergy Power GmbH, 53359 Rheinbach (DE)
(72) Erfinder: WIEZORECK, Jan, 53111 Bonn (DE); BÜHRER, Carsten, 53125 Bonn (DE)
(74) Vertreter: Althaus, Arndt
(86) Internationale Anmeldenummer: PCT/EP2006/010913
(87) Internationale Veröffentlichungsnummer: WO 2007/054366

(56) Entgegenhaltungen:
- EP-A1- 0 774 826
- WO-A-02/089302
- WO-A-03/015247
- WO-A2-01/48888
- DE-A1- 4 217 357
- DE-A1- 10 317 993
- US-A- 3 911 706
- US-A- 4 692 673
- US-A1- 2005 006 959
- US-B1- 6 329 728

## Beschreibung

Die Erfindung betrifft ein Primärteil eines Linearmotors mit einer Aufnahme für ein entlang einer Achse in der Aufnahme bewegbares Sekundärteil, mit mehreren koaxial zu der Aufnahme angeordneten, vorzugsweise ringförmigen Spulen und mit einem die Spulen an einem Spulenumfang umgebenden Joch, wobei Zähne aus einem weichmagnetischen Material zwischen Stirnseiten benachbarter Spulen angeordnet sind und jede Spule mindestens eine mit einem geeigneten Kühlmittel kühlbare Wicklung mit vorzugsweise auf einen Wickelkörper dicht gewikkelten Windungen eines Hochtemperatur-Supraleiters aufweist. Die Erfindung betrifft ferner auch einen Linearmotor mit einem derartigen Primärteil und einem mit diesem bewegbaren Sekundärteil.

Ein gattungsgemäßer Linearmotor mit Spulen aus Hochtemperatur-Supraleitern (HTS-Leitern) ist aus der EP 0 774 826 B1 bekannt. Zur Erregung der gattungsgemäßen Linearmotoren werden die supraleitfähigen Wicklungen eines Primärteils bzw. Stators mit Wechselstrom beaufschlagt, um in der Aufnahme des Primärteils ein veränderliches Magnetfeld für ein Sekundärteil bzw. einen Läufer zu erzeugen. Das Magnetfeld bewegt Primärteil und Sekundärteil relativ zueinander. Die aufeinanderliegenden windungen der Wicklung sind meist dicht gewikkelt, damit die Wicklung bei kompakter Bauform der Spule viele Windungen erhalten kann. Spulen mit derartigen Wicklungen eignen sich insbesondere zur Fertigung von sehr leistungsfähigen Linearmotoren. Zur Verstärkung des magnetischen Flusses werden zwischen den Spulen Zähne aus weichmagnetischem Material angeordnet, die von einem Joch als magnetischer Rückschluss für den Primärteil umgeben sind. Im Stand der Technik liegen die Spulen an den Zähnen an, um eine möglichst große magnetische Flußdichte in der Aufnahme zu erzeugen.

Die US 3,911,706 offenbart einen Primärteil für einen Linearmotor mit parallel zur Achse des Primärteils bewegbarem Sekundärteil. Das Primärteil weist mehrere koaxial zur Aufnahme angeordnete, mit Luft als Kühlmittel kühlbare Spulen mit Wicklungen aus einem Normalleiter auf. Die Kühlspalte für das Kühlmittel liegen zwischen dem Joch und den radialen Außenflächen der Spulen.

Die mit Wechselstrom beaufschlagten, supraleitfähigen Spulen müssen im Betriebseinsatz gekühlt werden, damit der Hochtemperatur-Supraleiter in einen supraleitenden Zustand übergeht. Das beim Einsatz von Wechselstrom mit den Spulen des Primärteils aufgebaute Magnetfeld induziert Wirbelströme in den Zähnen und dem Joch, die ebenso wie Hysterese in den Spulen und im weichmagnetischen Eisen Wärmeverluste erzeugen, die durch Kühlung mit dem Kühlmittel abgeführt werden müssen.

Aufgabe der Erfindung ist es, ein mit Wechselstrom erregbare, supraleitfähige Spulen aufweisendes Primärteil eines Linearmotors sowie einen entsprechenden Linearmotor zu schaffen, die bei einfacher Herstellung und kompakter Bauweise selbst bei hoher Leistungsdichte eine ausreichende Kühlung mit einem Kühlmittel ermöglichen.

Diese Aufgabe wird erfindungsgemäß dadurch gelöst, dass die Spulen dicht gewickelte Windungen aufweisen und zwischen den Stirnseiten der Spulen und den Zähnen Kühlspalte ausgebildet sind, in denen Abstandhalter angeordnet sind. Mit den zwischen den Zähnen und den Spulen vorhandenen Kühlspalten wird erreicht, dass ein beim Betrieb eines solchen Linearmotors für die Kühlung der Supraleiterspulen eingesetztes Kühlmittel die zu kühlenden Elemente wie insbesondere die Spulen, aber auch die Zähne, direkt und unmittelbar erreicht. Die insbesondere durch Hysterese und Wirbelströme entstehende Wärme wird quasi direkt an ihrem Entstehungsort abgeführt, ohne dass die begrenzte Wärmeleitfähigkeit des für das Joch oder die Zähne verwendeten Materials die Kühlungsleistung herabsetzen kann. Das im Betrieb die Kühlspalte im Primärteil ausfüllende bzw. durchströmende Kühlmittel kann sowohl die Spulen als auch die Zähne gleichzeitig kühlen und insbesondere die Stirnseiten der Spulen können im Betriebseinsatz großflächig von dem Kühlmittel umströmt bzw. umgeben werden. Die Abstandhalter in den Kühlspalten verhindern gleichzeitig, dass die magnetischen Kräfte zu Deformationen oder Lageänderungen der Spulen und damit zu Beeinträchtigungen oder Verkleinerungen der Kühlspalte führen können. Mit den dicht gewickelten Wicklungen der Spulen ist dabei gewährleistet, dass die Spulen eine hohe effektive Stromdichte besitzen.

Die Kühlspalte weisen vorzugsweise eine Spaltdicke auf, die größer ist als der mittlere oder maximale Durchmesser von Gasblasen, die bei der Wärmeabfuhr mit dem Kühlmittel insbesondere aufgrund eines hierbei stattfindenden Phasenübergangs des Kühlmittels von flüssig zu gasförmig entstehen. Falls sich das Kühlmittel im Kühlspalt durch Wärmeverluste erwärmen sollte, wird mit den entsprechend ausreichend groß dimensionierten Kühlspalten sichergestellt, dass die Gasblasen nicht im Kühlspalt zwischen der Stirnseite der Spule und dem jeweils beabstandet gegenüberliegenden Zahn hängen bleiben. Die Kühlspalte stellen sicher, dass ein sicherer Abtransport der Gasblasen mittels bzw. im Kühlmittel stattfindet. Die ggf. entstehenden Gasblasen können vorzugsweise durch ihren Eigenauftrieb im Kühlmittel abtransportiert werden, so dass die Gefahr einer Überhitzung der Spulen aufgrund einer Ansammlung von Gasblasen im Kühlspalt und damit einhergehend einer verschlechterten bzw. verhinderten Kühlwirkung des Kühlmittels konstruktiv verhindert wird. Der Abtransport kann auch durch eine forcierte Strömung des Kühlmittels erreicht oder unterstützt werden. Die Spaltdicke ist vorzugsweise gleichzeitig so klein, dass die Leistungsdichte des Primärteils nicht oder allenfalls gering durch eine Verringerung des magnetischen Flusses herabgesetzt ist. Die mit den Abstandhaltern gebildeten Kühlspalte haben vorzugsweise eine Spaltdicke, die im wesentlichen gleich oder kleiner ist als die doppelte mittlere Gasblasengröße der beim Phasenübergang entstehenden Gasblasen des Kühlmittels. Als Kühlmittel kann insbesondere Stickstoff dienen. Bei Stickstoff kann die Spaltdicke beispielsweise etwa 0,7 mm ± 10% betragen. Bei Stickstoff als Kühlmittel kann die Spaltdicke ferner vorzugsweise kleiner als etwa 1,4 mm ± 10% sein.

Gemäß einer vorteilhaften Ausgestaltung können die Abstandhalter weniger als 25%, vorzugsweise weniger als 20%, insbesondere weniger als 15% des Kühlspaltes ausfüllen, so dass beim Betrieb des Primärteils sichergestellt ist, dass die Spulen und die Zähne großflächig mit Kühlmittel kontaktiert werden.

Die Stirnseiten der jeweils verwendeten supraleitfähigen Spulen sind zweckmäßig kühlmitteldicht geschlossen, was den Vorteil hat, dass die Leistungsfähigkeit bzw. effektive Stromdichte der Spule nicht durch hohle Zwischenräume zwischen den Windungen herabgesetzt ist. Die Wicklungen der Spulen sind vorzugsweise in Vergussmasse, z.B. aus Kunststoff, eingegossen, wodurch die dicht gewickelten Windungen geschützt und in ihrer Lage zueinander fixiert sind. Gemäß einer insbesondere bevorzugten Ausgestaltung ist die Wicklung aus einem bandförmigen Hochtemperatur-Supraleiter gewickelt, wobei weiter vorzugsweise die einzelnen Windungen voneinander durch eine Isolationsfolie getrennt bzw. isoliert werden. Die mit einem bandförmigen HTS-Leiterdraht gebildeten windungen sind vorzugsweise dicht aufeinanderliegend gewickelt, damit die Spule bei kompakter Bauform möglichst viele Windungen erhält. Der Hochtemperatur-Supraleiter kann in der Pulver-im-Rohr-Technik gefertigt sein oder als Dünnschichtleiter oder als Stapel von Dünnschichtleitern ausgebildet sein. Die Spule ist zweckmäßig als eine Doppelscheibenspule - eine sogenannte "Doublepancake-Spule" - mit zwei nebeneinander angeordneten, gegenläufig gewickelten Wicklungen ausgeführt, die am Wickelkörper ineinander übergehen.

In einer vorteilhaften Ausgestaltung der Spulen ist jede der Wicklungen von einer Verstärkung am Spulenumfang zumindest teilweise umgriffen. Die erfindungsgemäß vorgesehenen Abstandhalter können sich entlang der Stirnseite der Spule von der Verstärkung bis zu einem Wickelkörper erstrecken. Die Abstandhalter sind vorzugsweise an den Spulen befestigt. Die Abstandhalter sind weiter vorzugsweise an beiden Stirnseiten jeder Spule angeordnet, wodurch jede Spule an beiden Stirnseiten einen Kühlspalt für eine unmittelbare Beaufschlagung bzw. Versorgung mit Kühlmittel erhält. Weiter vorzugsweise können die sich gegenüberliegenden Abstandhalter an diesen Stirnseiten fluchtend zueinander positioniert werden, wodurch axiale Kräfte auf die Abstandhalter nur symmetrisch auf die Stirnseiten der Spulen übertragen werden können. Bei einer besonders vorteilhaften Ausgestaltung sind die Abstandhalter an den Stirnseiten gleichwinklig versetzt und/oder auf unterschiedlichen Teilkreisen um eine zentrale Achse der Spule bzw. des Wickelkörpers angeordnet. Die Abstandhalter können auch parallel zueinander ausgerichtet sein, wobei dann die Ausrichtung im Einbauzustand der Spulen vorzugsweise vertikal ist.

Die Abstandhalter können aus geeignetem Kunststoff wie faserverstärktem, insbesondere glasfaserverstärktem Kunststoff bestehen. Die Abstandhalter können insbesondere aus quadratischen oder streifenförmigen Glasfaser-Abschnitten wie Epoxydplättchen od.dgl. gefertigt sein, die vorteilhafterweise außen auf die Stirnseiten der Spulen aufgeklebt sind. Bei in Kunststoff eingegossenen Spulen und in Kunststoff eingegossenen bzw. mit einem Kunststoffüberzug versehenden Abstandhaltern kann das Verkleben z.B. mit Epoxydharz erfolgen. Die Abstandhalter können auch aus anderen, geeigneten, nicht magnetisierbaren und/oder nicht elektrisch leitenden Materialen bestehen. Geeignete Materialien für die Abstandhalter können insbesondere ein Polyethylen oder ein Polypropylen sein. Entsprechende Materialien werden unter den Handelsnamen Kapton, Apikal oder Nomex vertrieben. Die Verwendung von Abstandhaltern aus einem anderen Material als das weichmagnetische Material der Zähne hat den Vorteil, dass die Abstandhalter den magnetischen Fluss in den Zähnen nicht, insbesondere nicht negativ beeinflussen können.

Die zwischen die Spulen reichenden Zähne sind zweckmäßig ebenfalls ringförmig ausgebildet. Die Zähne können sich vom Joch aus radial zur Achse jeweils bis über die Innenwicklung und/oder den Wickelkörper der Spule hinaus erstrecken. Die Zähne können dabei einstückig an dem Joch ausgebildet sein. Alternativ können sie aus scheibenförmigen Ringen oder Ringpaketen bestehen, die vorteilhaft zur Vermeidung von Wirbelstromverlusten geschlitzt oder teilweise geschlitzt sein können. Die Zähne und/oder das Joch können vorzugsweise Eisen oder eine Eisenlegierung als weichmagnetisches Material aufweisen oder aus diesen bestehen. Das Joch weist vorzugsweise für jeden Kühlspalt wenigstens eine Eintritts- und eine Austrittsöffnung auf. Besonders vorteilhaft ist, wenn das Joch am Umfang in regelmäßigem Abstand mit Austrittsöffnungen versehen ist, so dass eventuell beim Betrieb entstehende Gasblasen des Kühlmittels durch die Austrittsöffnungen aus den Kühlspalten entweichen können. Die Austrittsöffnungen können insbesondere in einer Oberseite eines Jochs eines Linearmotors angeordnet sein, um Ansammlungen der aufgrund der Gravitationskräfte nach oben steigenden Gasblasen im Joch zu verhindern. Weitere Vorteile und Ausgestaltungen der Erfindung ergeben sich aus der nachfolgenden Beschreibung von in der Zeichnung gezeigten Ausführungsbeispielen eines Linearmotors bzw. von erfindungsgemäßen Primärteilen. In der Zeichnung zeigt:
- **Fig. 1**: schematisch einen Längsschnitt durch einen Linearmo- tor mit Primärteil und Sekundärteil;
- **Fig. 2**: schematisch eine beim Primärteil in Fig. 1 einge- setzte Spule in Ansicht auf eine Stirnseite;
- **Fig. 3**: schematisch eine Spule gemäß einem zweiten Ausfüh- rungsbeispiel; und
- **Fig. 4**: einen Vertikalschnitt durch eine obere Spulenhälfte einer bei einem erfindungsgemäßen Primärteil ver- wendbaren Doppelscheibenspule.

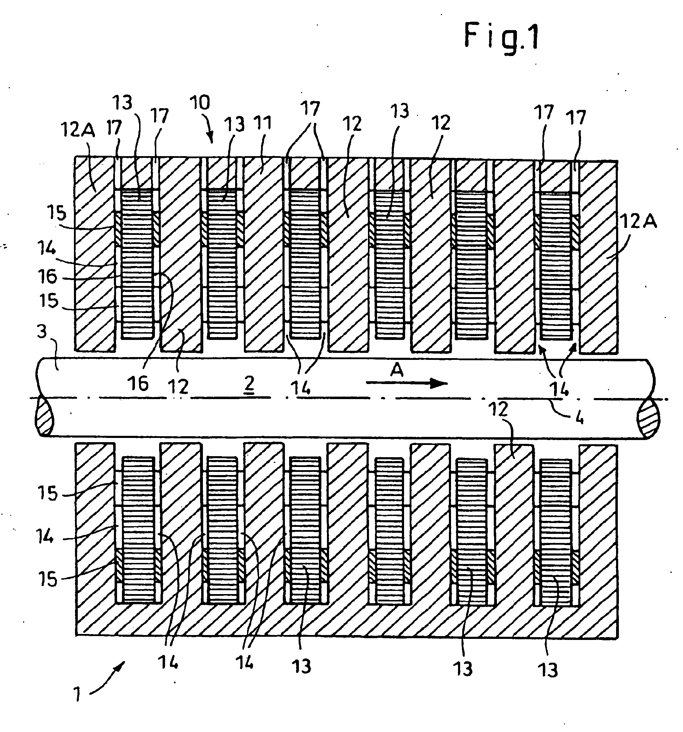

In Figur 1 ist stark schematisch vereinfacht ein Linearmotor 1 mit einem hier zylindrischen Primärteil 10 und einem hier zylindrischen Sekundärteil 3 dargestellt. Anwendungsgebiete der erfindungsgemäßen Linearmotoren sind beispielsweise kompakt gebaute Hubantriebe an Pressanlagen oder Einschubantriebe von Spritzgussmaschinen od.dgl.. Der beim Linearmotor 1 den Läufer bildende Sekundärteil 3 ist in einer hier konzentrisch im Primärteil 10 ausgebildeten Aufnahme 2 angeordnet. Wie für Linearmotoren bekannt kann durch Bestromen von im Primärteil 10 angeordneten Spulen 13 der Sekundärteil 3 in Ausschubrichtung A entlang der Achse 4 der Aufnahme 2 bewegt werden. Das Erregen der erfindungsgemäß aus Wicklungen mit Hochtemperatur-Supraleiterbandleitern hergestellten Spulen 13 erfolgt durch Bestromen mit Wechselstrom. Die Spulen 13 weisen jeweils nur schematisch angedeutete, dicht gewickelte Wicklungen aus dem supraleitfähigen Bandleiter auf, um eine hohe Wicklungszahl in den Spulen 13 zu erreichen. Der Strom erzeugt in den Spule 13 ein magnetisches Feld, das in Wechselwirkung zu Magnetpolen im Sekundärteil 4 tritt und hierdurch dessen Verschiebung in Ausschubrichtung A bewirkt.

Der Linearmotor 1 kann beispielsweise in einem nicht dargestellten, einen Badkryostaten od.dgl. bildenden Gehäuse angeordnet sein, dem über eine Öffnung ein Kühlmedium wie insbesondere flüssiger Stickstoff zum Kühlen insbesondere der supraleitfähigen Spulen 13 des Primärteils 10 zugeführt wird. Der Sekundärteil 3 kann dann in Lagern an dem Gehäuse verschieblich geführt sein. Wie an sich für zylindrische Linearmotoren bekannt weist der die Aufnahme 2 umfassende Primärteil 10 ein mantelförmiges Joch 11 als magnetischen Rückschluss auf, das mehrteilig ausgebildet sein kann und im Wesentlichen den äußeren Umfang des Primärteils 10 bildet. Jede Spule 13 ist zwischen zwei Zähnen 12 bzw. 12A angeordnet, die mit dem Joch 11 einstückig verbunden sein können und sich im Wesentlichen radial zwischen zwei Spulen 13 erstrecken. Die beiden äußeren Zähnen 12A liegen jeweils nur zu einer Spule 13 benachbart. In Achsrichtung bzw. Ausschubrichtung A gesehen wechseln sich Zähne 12A, 12 und Spulen 13 ab. Die Zähne 12, 12A aus geeignetem weichmagnetischem Material können auch aus Blechringpaketen od.dgl. bestehen und sich ringförmig und konzentrisch um die Aufnahme 2 erstrecken. In Radialrichtung ragen die Zähne vom Joch 11 über die Innenseiten der Spulen 13 hinaus.

Das Sekundärteil kann ein elektrisch gut leitendes Rohr oder eine Kombination aus elektrisch gut leitendem Material und weichmagnetischem Material sein (Asynchronvariante) oder aus permanent erregten Elementen mit weichmagnetischen Material zur Feldführung bestehen. Die permanent erregten Elemente können Permanentmagneten, mit Gleichstrom durchflossene Spulen oder Supraleiter-Festkörper mit eingefrorenem Feld sein. Auf das weichmagnetische Material kann auch verzichtet werden.

Erfindungsgemäß ist zwischen jeder Spulen 13 und dem benachbart angeordneten Zahn 12, 12A ein Kühlspalt 14 ausgebildet, in den das nicht dargestellte Kühlmittel wie insbesondere Stickstoff zum Kühlen der Spulen 13 eintreten kann. Mit dem Kühlmittel werden die supraleitfähigen Wicklungen in den Spulen 13 auf eine Temperatur oder darunter abgekühlt, bei welcher der verwendete HTS-Bandleiter supraleitend wird. Die Kühlspalte 14 erstrecken sich parallel zu den Stirnseiten 16 der Spulen 13 bzw. den Seitenflächen der Zähne 12, 12A, so dass sich insgesamt in Achsrichtung gesehen eine Anordnung von Zahn 12A, Kühlspalt 14, Spule 13, Kühlspalt 14, Zahn 12, Kühlspalt 14 etc. ergibt. In jedem Kühlspalt 14 sind mehrere Abstandhalter 15 angeordnet. Jede Spule 13 ist an beiden Stirnseiten 16 mit Abstandhaltern 15 versehen, die sich vorzugsweise fluchtend gegenüberliegen, um Kräfte in Axialrichtung optimal abstützen zu können. Durch das in den Kühlspalten 14 zirkulierende bzw. einströmende Kühlmittel werden sowohl die Stirnseiten 16 der Spulen 13 als auch die Zähne 12 bzw. 12A unmittelbar und großflächig gekühlt. Hierdurch können Wärmeverluste, die beispielsweise durch Hysterese in den Zähnen 12, 12A oder den Spulen 13 entstehen, mit dem Kühlmittel im Wesentlichen unmittelbar am Entstehungsort abgeführt werden.

Die Spaltdicke der Kühlspalte 14 ist vorzugsweise so groß, dass u.a. Gasblasen, die durch einen Phasenübergang des Kühlmittels von flüssig zu gasförmig entstehen, im Kühlspalt 14 zwischen der Stirnseite 16 der Spule 13 und dem benachbart liegenden Zahn 12, 12A nicht hängenbleiben können. Bei diesen Gasblasen kann es sich auch um in der umgebenden Flüssigkeit gelöstes Gas handeln, dass nicht zu größeren Blasen aggregiert. Die Gasblasen können dann durch Eigenauftrieb im Kühlmittel, ggf. durch fremdforcierte Konvektion des Kühlmittels od. dgl. unterstützt, im Kühlspalt 14 aufsteigen und dann durch Austrittsöffnungen 17 im Joch 11 aus den Kühlspalten 14 entweichen, ohne dass eine Ansammlung von Gasblasen im Kühlspalt auftritt. Die Gasblasen können sich bei der verwendeten Spaltdicke nicht im Kühlspalt 14 sammeln und somit nicht zu einer lokalen Überhitzung der supraleitenden Wicklungen der Spulen 13 führen. Im gezeigten Ausführungsbeispiel hat das Joch 11 für jeden Kühlspalt 14 wenigstens eine Austrittsöffnung 17. Die Spaltdicke der Kühlspalte 14 kann bei Stickstoff als Kühlmittel insbesondere zwischen 0,5 mm und 1 mm, vorzugsweise zwischen 0,6 mm und 0,8 mm und insbesondere bei etwa 0,7 mm ± 10% liegen.

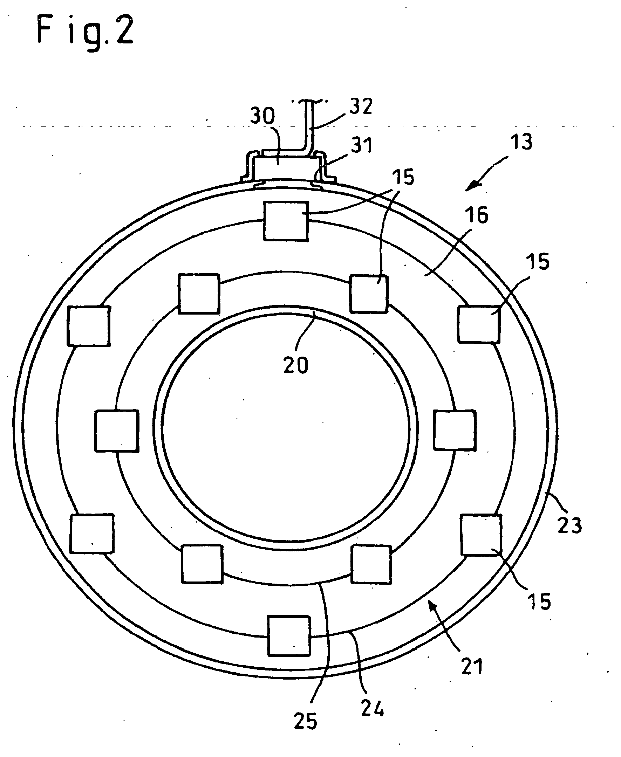

Fig. 2 zeigt schematisch in Ansicht auf eine der beiden Stirnseiten 16 eine beim Primärteil gemäß Fig. 1 vorteilhaft einsetzbare Spule 13. Die Spule 13 hat eine auf einen ringförmigen Wickelkörper 20 gewickelte, im Einzelnen nicht dargestellte Wicklung 21. Ein Anschlussstück 30 dient zur Kontaktierung der Wicklung 21. Das hier blockförmige Anschlussstück 30 besteht aus Kupfer und ist an seiner Unterseite am Umfang der Wicklung 12 angelötet. An seiner Oberseite ist eine elektrisch leitfähige Zuleitung 32 angelötet. Am Umfang der Wicklung 21 der Spule 13 liegt ein äußerer, faserverstärkter Ring 23 an, der sich von der einen Querseite des Anschlussstücks 30 um die Wicklung 21 herum bis zur anderen Querseite des Anschlussstück erstreckt. Der Verstärkungsring 23 fasst mit seinen Enden in Ausnehmungen 31 ein, die in den Querseiten des Anschlussstück ausgebildet sind, wodurch schenkelartige Fortsätze am Anschlussstück 30 partiell von dem Verstärkungsring 23 in radialer Richtung überdeckt sind. Die Wicklung 21 ist zusammen mit dem Wickelkörper 20, dem Verstärkungsring 23 und dem Anschlussstück 30 in eine Epoxydharzschicht als Ummantelung eingegossen.

Auf beiden Stirnseiten 16 der Spule 13 sind jeweils zwölf quadratische Abstandhalter 15 aus glasfaserverstärkten Epoxydharzplättchen aufgeklebt, mit denen im Montagezustand des Primärteils, wie in Fig. 1 dargestellt, die Kühlspalte zwischen einem Zahn 12, 12A und der Spule 13 gebildet werden. Bei der Spule 13 in Fig. 2 sind die Abstandhalter 15 auf zwei Kreisen 24, 25 und jeweils gleichwinklig versetzt zueinander angeordnet. Jeweils sechs Abstandhalter 15 sind auf dem inneren Kreis 24 und weitere sechs Abstandhalter 15 auf dem äußeren Kreis 25 angeordnet. Die zwölf Abstandhalter bedecken die mit dem Kühlmittel vorrangig zu kühlende Wicklung 21 insgesamt nur kleinflächig, wodurch beim Betrieb eines Primärteils mit diesen Spulen 13 ein Kühlmittel wie Stickstoff großflächig die supraleitende Wicklung 21 kühlen kann.

Eine Kühlung durch flüssigen Stickstoff findet, anders als z.B. bei einer Wasserkühlung, nicht durch Wärmeaufnahme des Kühlmittels und Nutzung der Wärmekapazität, sondern hauptsächlich durch einen Phasenübergang des Kühlmittels von der Flüssigphase in die Gasphase statt. Entstehende Gasblasen oder im Kühlmedium gelöstes Gas müssen dabei aus dem Kühlspalt zwischen der Stirnseite 16 der Spule und dem benachbart liegenden Zahn entweichen können. Die Abstandhalter 15 sorgen entlang der gesamten Stirnseiten 16 für einen im Wesentlichen gleichbleibenden Kühlspalt und stellen sicher, dass die Gasblasen oder das gelöste Gas nicht durch Adhäsionskräfte im Kühlspalt hängenbleiben können. Die Abstandhalter verhindern mithin, dass eine Ansammlung von Gasblasen auftritt, wodurch die Spulen 13 lokal überhitzen könnten. Die Dicke der Abstandhalter 15 ist daher so gewählt, dass die bei der Wärmeabfuhr entstehende Gasblasen durch Eigenauftrieb oder Konvektion im Kühlmittel entlang der Stirnseiten 16 der Spulen abtransportiert werden können.

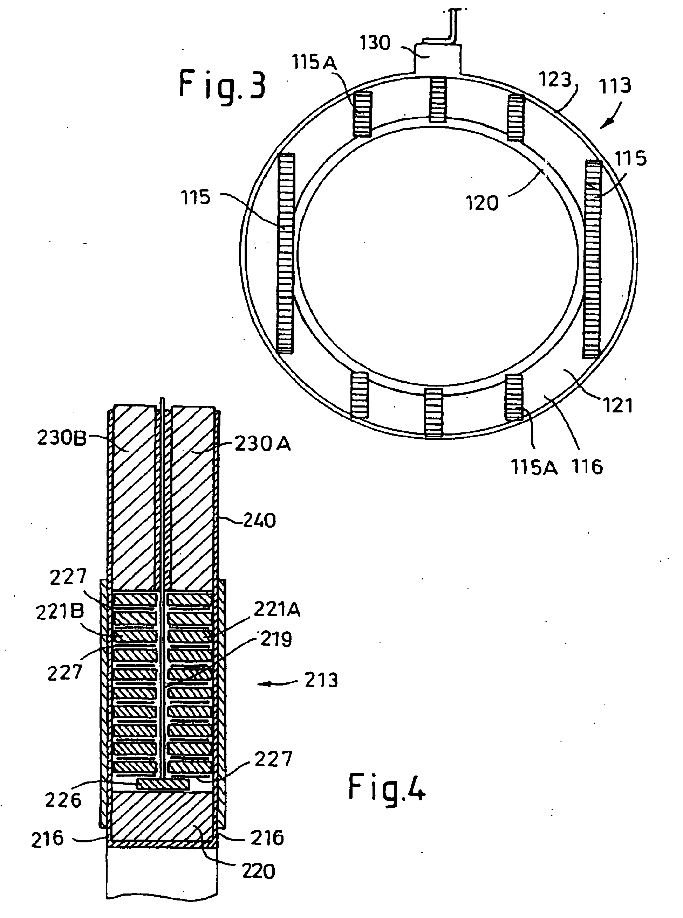

Fig. 3 zeigt ein zweites Ausführungsbeispiel für eine Spule 113 mit einer supraleitfähigen Wicklung 121, die wiederum auf einen Wickelkörper 120 gewickelt ist. Auch die Spule 113 kann bei einem Primär teil bzw. Linearmotor, wie in Fig. 1 dargestellt, verwendet werden. Am Umfang der Wicklung der Spule 113 ist wiederum ein Verstärkungsring 123 angeordnet, der zusammen mit der Wicklung 121, dem Anschlussstück 130 und dem Wickelkörper 120 in Kunststoff eingegossen ist, um das Anschlussstück 130 zugfest an der Wicklung 121 zu verankern. Auf der Stirnseite 116 der Spule 113 sind acht Abstandhalter 115, 115A aufgeklebt. Die streifenförmigen Abstandhalter 115, 115 verlaufen jeweils parallel zueinander und erstrecken sich jeweils vom Wickelkörper 120 bis zur Verstärkung 123. Die Abstandhalter 115, 115A weisen zueinander gleiche Abstände auf, wobei die äußeren Abstandhalter 115A eine deutlich größere Länge aufweisen als die inneren bzw. weiter innenliegenden Abstandhalter 115. Es versteht sich, dass auch auf der rückwärtigen Stirnseite entsprechende Abstandhalter aufgeklebt sind, um die Spulen 113 und damit die Wicklungen 121 beidseitig unmittelbar mit dem Kühlmittel zu kühlen.

Fig. 4 schließlich zeigt eine Spule 213 in Ausführungsform als sogenannte "Doublepancake-" oder Doppelscheibenspule für ein erfindungsgemäßes Primärteil bzw. einen erfindungsgemäßen Linearmotor. Die Spule 213 hat zwei ineinander übergehende und gegenläufig gewickelte Wicklungen 221A und 221B aus einem Hochtemperatur-Supraleiterband. Die Wicklungen 221A und 221B gehen am Außenumfang eines Wickelkörpers 220 über eine gemeinsame innere Windung 226 ineinander über. Am Außenumfang jeder Wicklung 221A, 221B ist jeweils ein Anschlussstück 230A, 230B angelötet. Die beiden Anschlussstücke 230A, 230B sind parallel zueinander und nebeneinander angeordnet und durch einen isolierenden Spalt voneinander getrennt. Die Windungen der Wicklungen 221A, 221B liegen dicht aufeinander und sind nur durch eine dünne, mit aufgewickelte Isolierfolie 227 voneinander getrennt. Zwischen beiden Wicklungen 221A, 221B ist außerdem eine Zwischenisolierung 219 angeordnet, die sich auch zwischen beiden Anschlussstücken 230A, 230B erstreckt. Die gesamte Spule 213 mit den angelöteten Anschlussstücken 230A, 230B ist in eine Ummantelung 240 aus Epoxydharz eingegossen. Die Stirnseiten 216 der Spule 213 sind dicht bzw. geschlossen und durch die Stirnseiten 216 kann kein Kühlmittel hindurchtreten oder hindurchströmen. Zur Ausbildung von Kühlspalten im Montagezustand der Spulen 213 in einem erfindungsgemäßen Primärteil oder Linearmotor sind an beiden Stirnseiten 216 wiederum Abstandhalter 215 z.B. mittels Epoxydharz aufgeklebt.

Für den Fachmann sind aus der Beschreibung zahlreiche Modifikationen ersichtlich, die in den Schutzbereich der anhängenden Ansprüche fallen sollen. Im Ausführungsbeispiel sind zylindrische Primär- und Sekundärteile beschrieben. Die Primär- und Sekundärteile könnten auch flach oder nur teilzylindrisch ausgebildet sein. Sämtliche Abstandhalter können insbesondere aus faserverstärkten und in Kunststoff eingegossenen Plättchen oder Streifen aber auch aus anderen Materialien wie Kunststofffolien bzw. nicht magnetisierbaren Materialien bestehen. Die Abstandhalter können auch bereits bei der Fertigung der Spulen ausgebildet werden. Im Joch können weitere Zu- oder Abströmöffnungen für das Kühlmittel vorgesehen sein. Die Abströmöffnungen und/oder die Kühlspalte können auch durch Verbindungskanäle verbunden sein. Der Primärteil bzw. der Linearmotor kann auch bei der Drahtfertigung eingesetzt werden und einen Antrieb für einen Stab, Rohr oder Metallstrang als Sekundärteil bilden, um diesen durch einen Ziehring hindurchzuschieben oder -zuziehen.

## Patentansprüche

1. Primärteil (10) eines Linearmotors mit einer Aufnahme (2) für ein entlang einer Achse (4) der Aufnahme (2) bewegbares Sekundärteil, mit mehreren Spulen (13; 113; 213) koaxial zu der Aufnahme (2) und mit einem die Spulen umgebenden Joch (11), wobei aus einem weichmagnetischen Material bestehende Zähne (12, 12A) zwischen Stirnseiten (16; 116; 216) benachbarter Spulen angeordnet sind und wobei die mit Kühlmittel kühlbaren Spulen dicht gewickelte Windungen aufweisen, **dadurch gekennzeichnet, dass** die Spulen (13; 113; 213) mindestens eine Wicklung (21, 121) mit Windungen eines Hochtemperatur-Supraleiters aufweisen und zwischen den Stirnseiten (16) der Spulen (13) und den Zähnen (12) Kühlspalte (14) ausgebildet sind, in denen Abstandhalter (15) angeordnet sind.

2. Primärteil nach Anspruch 1, **dadurch gekennzeichnet, dass** die Kühlspalte (14) eine Spaltdicke aufweisen, die größer ist als ein Durchmesser von Gasblasen, die bei einem durch die Wärmeabfuhr bewirkten Phasenübergang des Kühlmittels von flüssig zu gasförmig entstehen.

3. Primärteil nach Anspruch 1 oder 2, **dadurch gekennzeichnet, dass** das Kühlmittel flüssiger Stickstoff ist.

4. Primärteil nach einem der Ansprüche 1 bis 3, **dadurch gekennzeichnet, dass** die Abstandhalter (15) weniger als 20 %, vorzugsweise weniger als 10 %, insbesondere weniger als 5 % des Kühlspaltes (14) ausfüllen.

5. Primärteil nach einem der Ansprüche 1 bis 4, **dadurch gekennzeichnet, dass** die Wicklung (21, 121, 221A, 221B) in Kunststoff (240) eingegossen ist und/oder die Stirnseiten (16; 116; 216) der Spulen (13; 113; 213) kühlmitteldicht geschlossen sind.

6. Primärteil nach einem der Ansprüche 1 bis 5, **dadurch gekennzeichnet, dass** die Wicklung (21; 121; 221A, 221B) aus einem bandförmigen Hochtemperatur-Supraleiter gewickelt ist, wobei vorzugsweise die einzelnen Windungen unter Zwischenlage einer Isolationsfolie (227) unmittelbar aufeinanderliegend gewickelt sind.

7. Primärteil nach einem der Ansprüche 1 bis 6, **dadurch gekennzeichnet, dass** die Wicklung (21; 121) am Spulenumfang von einer Verstärkung (23; 123) zumindest teilweise umgriffen ist.

8. Primärteil nach Anspruch 7, **dadurch gekennzeichnet, dass** sich die Abstandhalter (115) an der Stirnseite von der Verstärkung (123) bis einem Wickelkörper (120) erstrecken.

9. Primärteil nach einem der Ansprüche 1 bis 8, **dadurch gekennzeichnet, dass** an beiden entgegengesetzten Stirnseiten (16; 116; 216) jeder Spule (13; 113; 213) Abstandhalter (15; 115; 215) angeordnet sind, die vorzugsweise einander an den Stirnseiten gegenüberliegend positioniert sind.

10. Primärteil nach einem der Ansprüche 1 bis 9, **dadurch gekennzeichnet, dass** mehrere Abstandhalter (15) an einer Stirnseite (16) gleichwinklig versetzt zueinander und/oder auf unterschiedlichen Kreisen (24, 25) angeordnet sind.

11. Primärteil nach einem der Ansprüche 1 bis 10, **dadurch gekennzeichnet, dass** die Abstandhalter (15; 115; 215) aus Kunststoff, insbesondere faserverstärktem Kunststoff und/oder nicht magnetisierbarem Material bestehen.

12. Primärteil nach einem der Ansprüche 1 bis 11, **dadurch gekennzeichnet, dass** die Zähne (12, 12A) ringförmig ausgebildet sind.

13. Primärteil nach einem der Ansprüche 1 bis 12, **dadurch gekennzeichnet, dass** das Joch (11) für jeden der Kühlspalte (14) wenigstens eine Eintrittsöffnung und/oder eine Austrittsöffnung (17) aufweist.

14. Primärteil nach einem der Ansprüche 1 bis 13, **dadurch gekennzeichnet, dass** die Spulen (213) als Doppelscheibenspulen mit zwei nebeneinander angeordneten, gegenläufig gewickelten Wicklungen (221A, 221B) ausgeführt sind.

15. Linearmotor mit einem Primärteil (10) und einem in einer Aufnahme (2) des Primärteils (10) entlang einer Achse (4) in der Aufnahme (2) bewegbaren Sekundärteils (3), **dadurch gekennzeichnet, dass** das Primärteil (10) gemäß einem der Anspruche 1 bis 14 ausgebildet ist.

## Claims

1. A primary part (10) of a linear motor, with a receptacle (2) for a secondary part being movable along an axis (4) of the receptacle (2), with a plurality of coils (13; 113; 213) which are arranged coaxially with respect to the receptacle (2), and with a yoke (11) which surrounds the coils, wherein teeth (12, 12A) being composed of a soft-magnetic material are arranged between end faces (16; 116; 216) of adjacent coils, and wherein the coils (13; 113; 213), which are coolable by coolant, are having densely wound turns, **characterized in that** the coils coils (13; 113; 213) have at least one winding (21, 121) with turns of a high-temperature superconductor, and that cooling gaps (14), in which spacers (15) are arranged, are formed between the end faces (16) of the coils (13) and the teeth (12).

2. The primary part as claimed in claim 1, **characterized in that** the cooling gaps (14) have a gap thickness which is greater than the diameter of gas bubbles which are produced during a coolant phase transition, caused by heat dissipation, from liquid to gaseous.

3. The primary part as claimed in claim 1 or 2, **characterized in that** the coolant is liquid nitrogen.

4. The primary part as claimed in one of claims 1 to 3, **characterized in that** the spacers (15) fill less than 20% of the cooling gap (14), preferably less than 10% of it, and in particular less than 5% of it.

5. The primary part as claimed in one of claims 1 to 4, **characterized in that** the winding (21, 121, 221A, 221B) is encapsulated in plastic (240) and/or the end faces (16; 116; 216) of the coils (13; 113; 213) are closed to be coolant-tight.

6. The primary part as claimed in one of claims 1 to 5, **characterized in that** the winding (21; 121; 221A, 221B) is wound from a high-temperature superconductor in the form of a strip, with the individual turns preferably being wound directly one on top of the other with the interposition of an insulation film (227).

7. The primary part as claimed in one of claims 1 to 6, **characterized in that** the winding (21; 121) is surrounded at least partly by a reinforcement (23; 123) on the coil circumference.

8. The primary part as claimed in claim 7, **characterized in that** the spacers (115) extend on the end face from the reinforcement (123) as far as a winding former (120).

9. The primary part as claimed in one of claims 1 to 8, **characterized in that** spacers (15; 115; 215) are arranged on both opposite end faces (16; 116; 216) of each coil (13; 113; 213) and are preferably positioned opposite one another on the end faces.

10. The primary part as claimed in one of claims 1 to 9, **characterized in that** a plurality of spacers (15) are arranged offset at identical angles to one another on an end face (16) and/or on different circles (24, 25).

11. The primary part as claimed in one of claims 1 to 10, **characterized in that** the spacers (15; 115; 215) are composed of plastic, in particular fiber-reinforced plastic and/or nonmagnetic material.

12. The primary part as claimed in one of claims 1 to 11, **characterized in that** the teeth (12, 12A) are formed in an annular shape.

13. The primary part as claimed in one of claims 1 to 12, **characterized in that** the yoke (11) has at least one inlet opening and/or one outlet opening (17) for each of the cooling gaps (14).

14. The primary part as claimed in one of claims 1 to 13, **characterized in that** the coils (213) are in the form of double-disk coils with two windings (221A, 221B) which are arranged alongside one another but are wound in opposite senses.

15. A linear motor having a primary part (10) and a secondary part (3) being movable along an axis (4) in the receptacle (2), **characterized in that** the primary part (10) is designed as claimed in one of claims 1 to 14.

## Revendications

1. Composant primaire (10) d'un moteur linéaire, comportant un logement (2) pour un composant secondaire déplaçable le long d'un axe (4) du logement (2), comportant plusieurs bobines (13 ; 113 ; 213) coaxiales par rapport au logement (2) et comportant une culasse (11) qui entoure les bobines, dans lequel des dents (12, 12A) constituées d'un matériau magnétique doux sont agencées entre des faces frontales (16 ; 116 ; 216) de bobines avoisinantes et dans lequel les bobines (13 ; 113 ; 213) qui peuvent être refroidies à l'aide d'un agent réfrigérant présentent des spires à enroulement serré, **caractérisé en ce que** les bobines (13 ; 113 ; 213) présentent au moins un bobinage (21, 121) avec des spires d'un supraconducteur à haute température et **en ce que** des fentes de refroidissement (14), dans les quelles des écarteurs (15) sont agencés, sont réalisées entre les faces frontales (16) des bobines (13) et les dents (12).

2. Composant primaire selon la revendication 1, **caractérisé en ce que** les fentes de refroidissement (14) présentent une épaisseur de fente qui est plus grande qu'un diamètre des bulles de gaz qui sont générées lors d'une transition de phase de l'agent réfrigérant de l'état liquide sur l'état gazeux, occasionnée par une dissipation thermique.

3. Composant primaire selon l'une ou l'autre des revendications 1 et 2, **caractérisé en ce que** l'agent réfrigérant est de l'azote liquide.

4. Composant primaire selon l'une des revendications 1 à 3, **caractérisé en ce que** les écarteurs (15) remplissent moins de 20%, de préférence moins de 10%, en particulier moins de 5% de la fente de refroidissement (14).

5. Composant primaire selon l'une des revendications 1 à 4, **caractérisé en ce que** le bobinage (21 ; 121 ; 221A, 221B) est coulé dans de la matière plastique (140) et/ou en ce que les faces frontales (16 ; 116 ; 216) des bobines (13 ; 113 ; 213) sont fermées avec étanchéité à l'agent réfrigérant.

6. Composant primaire selon l'une des revendications 1 à 5, **caractérisé en ce que** le bobinage (21, 121, 221A, 221B) est enroulé à partir d'un supraconducteur à haute température en forme de bande et dans lequel les bobinages individuels sont enroulés de préférence sous la couche intermédiaire d'une feuille d'isolation (227) en étant posés directement les uns sur les autres.

7. Composant primaire selon l'une des revendications 1 à 6, **caractérisé en ce que** le bobinage (21 ; 121) est entouré au moins en partie au début de la bobine par un renforcement (23 ; 123).

8. Composant primaire selon la revendication 7, **caractérisé en ce que** les écarteurs (115) s'étendent sur la face frontale du renforcement (123) jusqu'à un corps d'enroulement (120).

9. Composant primaire selon l'une des revendications 1 à 8, **caractérisé en ce que** des écarteurs (15 ; 115 ; 215) sont agencés sur les deux faces frontales opposées (16 ; 116 ; 216) de chaque bobine (13 ; 113 ; 213), lesquels sont positionnés de préférence sur les faces frontales placées l'une à l'opposé de l'autre.

10. Composant primaire selon l'une des revendications 1 à 9, **caractérisé en ce que** plusieurs écarteurs (15) sont agencés sur une face frontale (16) l'un par rapport à l'autre sous un décalage isogonique et/ou sur des cercles différents (24, 25).

11. Composant primaire selon l'une des revendications 1 à 10, **caractérisé en ce que** les écarteurs (15 ; 115 ; 215) sont constitués de matière plastique, en particulier de matière plastique renforcée aux fibres et/ou de matériau non magnétisable.

12. Composant primaire selon l'une des revendications 1 à 11, **caractérisé en ce que** les dents (12, 12A) sont réalisées avec une forme annulaire.

13. Composant primaire selon l'une des revendications 1 à 12, **caractérisé en ce que** la culasse (11) présente au moins une ouverture d'admission et/ou une ouverture d'évacuation pour chacune des fentes de refroidissement (14).

14. Composant primaire selon l'une des revendications 1 à 13, **caractérisé en ce que** les bobines (213) sont exécutées comme bobines à double disque avec deux bobinages (22 1 A, 22 1 B) agencés l'un à côté de l'autre et enroulés en sens contraire.

15. Moteur linéaire comportant un composant primaire (10) et un composant secondaire (3) déplaçable le long d'un axe (4) dans le logement (2) du composant primaire (10), **caractérisé en ce que** le composant primaire (10) est réalisé conformément à l'une des revendications 1 à 14.
